# EUROPEAN PATENT APPLICATION

(11) **EP 1 124 374 A1**
(43) Date of publication of application: **16.08.2001**
(21) Application number: 00200423.2
(22) Date of filing: 08.02.2000
(51) Int. Cl.: H04N 7/088

(54) **Teletext receiver**

(71) Applicant: Koninklijke Philips Electronics N.V., 5621 BA Eindhoven (NL)
(72) Inventor: The designation of the inventor has not yet been filed
(74) Representative: Schmitz, Herman Jan Renier

(57) **Abstract**

A method of receiving teletext pages in enclosed. The receiver creates a table of flags indicating for each page whether or not said page is available in the transmission. In order to register the absence of pages which are no longer transmitted, two tables (460,461) are alternately used. While one table is created, the other on is read to provide the presence or absence of information. The creation of a table is deemed completed after a given number of pages has been received more than once. Indications of the presence of teletext page numbers are stored alternately in one of two memory sections during a predetermined time period. The duration of the storage is controlled such that the indications are removed in a respective memory section prior to the storage of the indication.

## Description

### FIELD OF THE INVENTION

The invention relates to a method of receiving teletext pages each having a page number, comprising the steps of determining the page numbers of said transmitted teletext pages, and storing indications indicating the presence of the teletext pages in the transmission.

### BACKGROUND OF THE INVENTION

A teletext receiver as defined in the opening paragraph is disclosed in European Patent Application EP-A-0 581 994. The known receiver provides great convenience of use. When the user requests a new page, it is checked whether the indication of presence of said page in the cycle is stored. If the indication is not stored, the requested page is apparently not transmitted, and the user is informed accordingly so that he can choose another page.

The above cited patent application also discloses that the indication of presence of a teletext page is removed when the page is no longer transmitted. To this end, the indication is a number having the value 0 to indicate the absence of a page, and a value larger than 0 to indicate the presence of the page. Upon reception of a page, the indication is given a predetermined value larger than 1, for example 3. At predetermined intervals, all the stored indications different from 0 are decreased by 1. Thus, if a page is no longer transmitted, its corresponding indication will no longer be given the value 3, and eventually assume the value 0. A disadvantage of the prior art method is that it takes 3 intervals until the indication has indeed be removed or cleared. The intervals correspond preferably to the teletext transmission cycle period. However, the cycle period is generally unknown and varies from transmitter to transmitter. In the above cited patent application, the cycle period is a fixed period of time for all transmitters, for example 20 seconds.

### OBJECT AND SUMMARY OF THE INVENTION

It is an object of the invention to provide a method and corresponding receiver which exploits an alternative algorithm for determining which teletext pages are transmitted.

To this end, the method in accordance with the invention is characterized in that the memory includes two memory sections, the step of storing said indications comprising alternately storing said indications in one of said memory sections during a predetermined period of time, and removing said indications in the respective memory section prior to said storing of the indications. The actually transmitted teletext pages are thus alternately registered in one of the memory sections during a predetermined period of time, whereas the other memory section provides the actual indications. With the invention is achieved that the indications of pages that are no longer transmitted are removed within the next predetermined period of time.

In a practical embodiment, each memory section comprises a table having for each possible page number a location for storing the indication of presence of the respective page as a first value and the indication of absence of said page as a second value. It will be appreciated that this requires 1 bit per page number in each table. The advantages of the invention are thus achieved with the same memory capacity as in the prior art where one memory having 2 bits per page number is used.

The predetermined period of time during which the transmitted page numbers are registered may be a fixed time period. A reliable registration of the page numbers requires said time period to be at least equal to the actual teletext transmission cycle time. The longer the time period is, the longer it takes until the receiver recognizes that a page is no longer transmitted. On the other hand, a long time period prevents a page from being accidentally removed from the list in case of bit errors in the page number. The predetermined period of time is preferably related to the actual teletext cycle time. A known method of determining the teletext cycle time is disclosed in Applicant's European Patent Application EP-A-0 406 972. In a preferred embodiment of the method according to the invention the cycle time is determined by counting the number of times that a teletext page is received for which the indication of presence has already been stored. The predetermined period of time has lapsed when said number of times exceeds a given number.

### BRIEF DESCRIPTION OF THE DRAWINGS

Fig. 1 shows the general structure of a television receiver according to the invention.

Figs. 2A and 2B show teletext data lines of a television signal.

Fig. 3 shows diagrammatically the structure of a teletext decoder which is shown in Fig. 1.

Fig. 4 shows a flow diagram of operations that are carried out by a decoding circuit which is shown in Fig. 3.

Fig. 5 shows a flow diagram of operations that are carried out by a control circuit which is shown in Fig. 1.

### DESCRIPTION OF EMBODIMENTS

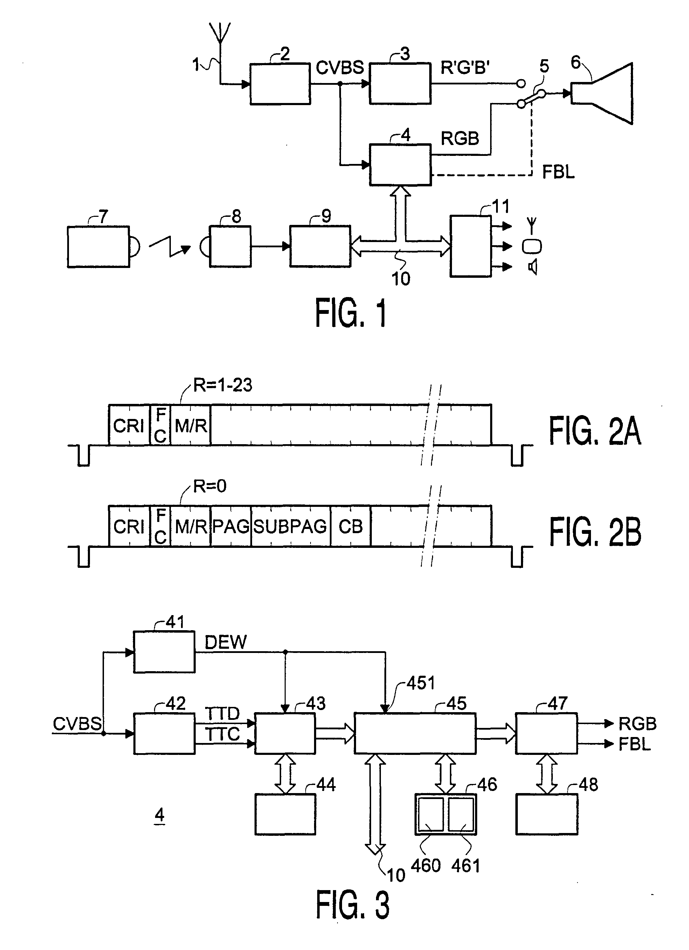

Fig. 1 shows the general structure of a television receiver according to the invention. The transmitter signals received at an antenna **1** are applied to a conventional tuning and demodulation circuit **2.** The obtained composite video signal CVBS of the selected television program is applied to a video signal processing circuit **3** and to a teletext decoder **4.** In a normal television operating state of the receiver, the elementary color signals R'G'B' generated by video signal processing circuit **3** are applied to a display screen **6** via a selector **5** in order that the user can watch the received television program. In a teletext operating state, which can be called by the user, the elementary color signals RGB of teletext decoder **4** are displayed via the selector **5.** The selector is operated by a blanking signal FBL which is generated in the teletext decoder. Operating instructions given by the user are generated in a (remote) control unit **7** and applied to a control circuit **9** via an infrared receiver **8.** Teletext decoder **4** is connected to this control circuit **9** by means of a command bus **10.** Furthermore an interface **11,** which enables control circuit **9** to tune to transmitters, to control brightness and volume and the like, is connected to this command bus. This is indicated by means of appropriate symbols in the Figure.

The composite video signal CVBS comprises one or more picture lines with teletext data during the field flyback interval. In the PAL TV system considered these may be, for example the lines 7-22 and 320-335. As is shown in Fig. 2, such a picture line comprises a so-called data packet of 45 bytes of 8 bits each. The first 2 bytes having a fixed value of 1010..10 are referred to as "clock-run-in" and are denoted by CRI in the Figure. The third byte is a so-called "framing code" FC and has also a fixed value. The next 2 bytes comprise a 3-bit magazine number M and a 5-bit row number R. They are protected from transmission errors by means of additional protection bits. The meaning of the other 40 bytes depends on the value of the row number R. If the row number has one of the values 1-23, as shown in Fig. 2A, the 40 bytes represent a text line of 40 characters for display on a display screen. Fig. 2B shows the data packet in the case where the row number R is equal to 0. Such a data packet, which is also referred to as page header, comprises eight page number bits PAG, a 13-bit sub page number SUBPAG and a number of control bits denoted by CB in the Figure. The page number bits PAG, the sub page number SUBPAG and the control bits CB are accommodated in eight bytes of the page header. These eight bytes comprise further additional protection bits against the occurrence of transmission errors. The remaining 32 bytes of the page header represent characters for display on the display screen. The last 8 characters thereof indicate the actual time in practice. A teletext page comprises a page header and 23 text lines. The transmission of a page begins with, and implies the relevant page header and subsequently comprises the relevant text lines. A multitude of teletext pages is transmitted in a repeating cycle. The duration of such a cycle depends on the number of pages and on the number of picture lines which is used for teletext in the field retrace. When using, for example two picture lines per field in a TV system having a 50 Hz field frequency, 100 data packets corresponding to approximately 4 teletext pages are transmitted per second. The duration of a cycle comprising, for example 100 pages is then 25 seconds.

It is to be noted that a teletext page is identified by means of the 3-bit magazine number M and the 8 page number bits PAG. They jointly constitute a 3-digit page identification which will be further referred to as the page number. In practice the numbers 100-899 are generally used.

Fig. 3 shows diagrammatically the functional structure of teletext decoder **4.** In this decoder the received composite video signal CVBS is applied to a synchronizing circuit **41** and a slicing circuit **42.** The synchronizing circuit **41** generates a window signal DEW at a field frequency, which signal occurs during the lines 7-22 and 320-335 in which the teletext signal may be present. The synchronizing circuit **41** also supplies various clock signals (not shown) to the other circuits.

Slicing circuit **42** regenerates a teletext signal TTD and an associated clock signal TTC and applies these signals to an acquisition circuit **43** which also receives the window signal DEW. During the period defined by window signal DEW acquisition circuit **43** checks the received teletext signal TTD on the occurrence of the previously mentioned framing code FC. If this code occurs in the picture line within a predetermined time interval, a valid teletext data packet is apparently received. The next 42 bytes from the signal are then successively stored in a reception buffer **44.** This is done autonomously under the control of clock signal TTC which has a frequency of approximately 6.9 MHz in the relevant TV system. After termination of the field flyback interval the data packets received in this interval are stored in reception buffer **44** and it will again take almost a full TV field of 20 msec before the next picture lines with teletext information are received. The data packets can be further processed during this period. To this end the acquisition circuit **43** is connected to a decoding circuit **45.** This decoding circuit is, for example, a microprocessor and is adapted to read and further process the data packets stored in reception buffer **44.** More particularly, decoding circuit **45** is adapted to read the row number R and, if R =0, to determine the page number of a transmitted page from the magazine number M and the page number bits PAG. The decoding circuit is further adapted to store a reception indication in a memory medium **46** for the teletext pages which are present in the transmitted cycle. Teletext decoder **4** also comprises a character generator **47** connected to the decoding circuit and a page memory **48** for storing at least the teletext page to be displayed. It is to be noted that in Fig. 3 the structure of the teletext decoder is shown functionally and that there are various possibilities for its actual realization. For example, in practice the acquisition circuit **43** and the character generator **47** will be coupled to decoding circuit **45** via a common data and address bus, and memory medium **46** and page memory **48** will be implemented as one memory. This memory is then also used in known manner for storing program variables and the like.

In accordance with the invention, the memory medium **46** comprises two memory sections. They are denoted **460** and **461** in Fig. 2. Each memory section is adapted to store reception indications indicating the presence of a page in the transmitted cycle. In a favorable embodiment of the teletext decoder, each memory section comprises for each possible page number a memory location which is addressable by the page number. Since the page number comprises a total number of 11 bits, 2048 memory locations are required. However, as previously stated, the page numbers remain limited in practice to 100-899 so that, if desired, it is sufficient to use 800 memory locations. To indicate whether a page is transmitted or not, 1 bit per memory location suffices. The 1-bit reception indications in memory section **460** are hereinafter denoted by M₀(100)-M₀(899), the corresponding indications in memory section **461** are denoted M₁(100)-M₁(899).

The operation of the teletext decoder is based on a program which is performed by the decoding circuit **45.** To this end the decoding circuit receives the window signal DEW from synchronizing circuit **41,** for example, via a so-called interrupt request input **451,** which signal indicates when new teletext data packets are stored in reception buffer **44.** The program performs a number of tasks which are irrelevant for the invention. For example, the program establishes which of the received data packets are text lines of a page to be displayed. The bytes of these packets are read in reception buffer **44** and after a possible conversion they are stored in a display format in page memory **48** for display by character generator **47.**

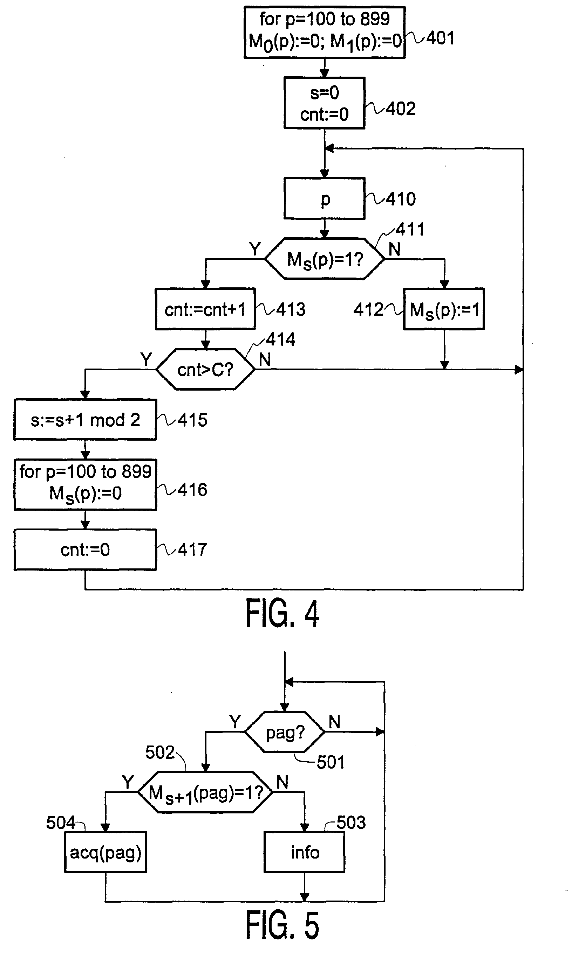

Fig. 4 shows a flow chart of operations carried out by the decoding circuit **45.** Two initial steps **401** and **402** are performed after tuning the receiver to a transmitter. In the initial step **401,** the memory locations M₀(100)-M₀(899) and M₁(100)-M₁(899) are all cleared to indicate that no teletext pages have been received yet. In the initial step **402,** a value 0 is assigned to an index s. The index s refers to the memory section (s=0 for memory section **460,** s=1 for memory section **461)** in which the presence indications will be stored. In the same step, a counter cnt is given the initial value 0. The meaning of this counter will become clear hereinafter.

The program subsequently enters a loop which is executed each time a teletext page is received. The loop starts with a step **410** in which the page number p is derived from the data in the page header (M and PAG in Fig. 2B). In a step **411,** it is checked whether a value 1 has already been stored in the memory location Mₛ(p). If said memory location still holds the initial value 0, then the teletext page p has been received for the first time. The value 1 is then stored in Mₛ(p), in a step **412,** to indicate that teletext page p has been found in the transmission. The program returns to the step **410** to await the reception of the next page.

If it has been found in the step **411,** that page p has already been found before, then a step **413** is performed in which the counter cnt is raised by 1. In a step **414,** it is subsequently checked whether the counter cnt thereby exceeds a predetermined value C. If that is not the case, the program returns to the step **410** to await the reception of the next page. If more than C repetitions have been found in the step **414,** then the decoding circuit assumes that a complete teletext transmission cycle has been detected. The steps **413** and **414** enable C often consulted pages to be accommodated more than once in a cycle without disturbing the cycle time detection algorithm. A practical value for C is, say 20.

In response to the detection of a cycle period, steps **415-417** are performed. In the step 415, the index s is incremented by 1. This is a modulo 2 operation so that s changes from 0 to 1, or from 1 to 0 as the case may be. This step causes the following teletext cycle to be registered in the other memory section. In the step **416,** the reception indications of said other memory section are first cleared. In the step **417,** the counter cnt assumes the initial value 0.

In this embodiment, the period of time during which the transmitted page numbers are registered in a memory section is approximately equal to the actual teletext cycle time. It is also possible to perform switching to the other memory section after a given number of said cycle times. This prevents a page from being accidentally removed from the table in case of bit errors in the page number.

Fig. 5 shows a flow diagram of operations that are performed by the control circuit **9** of the television receiver (see Fig. 1). In a step **501,** the control circuit checks whether the user requested a teletext page. The requested page number is denoted "pag". In a step **502,** the circuit evaluates the corresponding reception indication which is stored in memory location Mₛ₊₁(pag). The index s+1 (where +1 is a modulo 2 operation) denotes the other memory section than the one in which the reception indications are currently being stored as described above. Thus, while a new table of reception indications is being created in memory section **460,** the data in memory section **461** are read by the receiver's control circuit, and vice versa.

If it is found, in the step **502,** that the reception indication corresponding to the requested teletext page is 0, the page appears to be not present in the teletext cycle. In that case, an appropriate information message is displayed in a step **503.** Otherwise, the page is acquired and subsequently displayed in a step **504.**

A method of receiving teletext pages is disclosed. The receiver creates a table of flags indicating for each page whether or not said page is available in the transmission. In order to register the absence of pages which are no longer transmitted, two tables (460, 461) are alternately used. While one table is created, the other on is read to provide the presence or absence information. The creation of a table is deemed completed after a given number of pages has been received more than once.

## Claims

1. A method of receiving teletext pages each having a page number, comprising the steps of:
- determining the page numbers of said transmitted teletext pages;
- storing indications indicating the presence of the teletext pages in the transmission;
characterized in that said memory includes two memory sections, the step of storing said indications comprising alternately storing said indications in one of said memory sections during a predetermined period of time, and removing said indications in the respective memory section prior to said storing of the indications.

2. A method as claimed in claim 1, wherein each memory section comprises a table having for each possible page number a location for storing the indication of presence of the respective page as a first value and the indication of absence of said page as a second value.

3. A method as claimed in claim 1, further comprising the step of counting the number of times that a teletext page is received for which the indication of presence has already been stored, said predetermined period of time being lapsed when said number of times exceeds a given number.

4. A receiver for receiving teletext pages each having a page number, comprising:
- a control circuit for determining the page numbers of said transmitted teletext pages;
- a memory for storing indications indicating the presence of the teletext pages in the transmission;
characterized in that said memory includes two memory sections, the control circuit being arranged to alternately store said indications in one of said memory sections during a predetermined period of time, and remove said indications in the respective memory section prior to said storing of the indications.

5. A receiver as claimed in claim 4, wherein each memory section comprises a table having for each possible page number a location for storing the indication of presence of the respective page as a first value and the indication of absence of said page as a second value.

6. A receiver as claimed in claim 4, further comprising a counter for counting the number of times that a teletext page is received for which the indication of presence has already been stored, the control circuit being arranged to terminate said predetermined period of time when said counter exceeds a given count.
